# EUROPEAN PATENT APPLICATION

(11) **EP 4 109 338 A1**
(43) Date of publication of application: **28.12.2022**
(21) Application number: 21756995.3
(22) Date of filing: 15.02.2021
(51) Int. Cl.: G06K 19/077, H01Q 1/50, H01Q 9/16, H01Q 13/10

(54) **RFID TAG, AND ANTENNA**

(30) Priority: 19.02.2020 JP 2020026431
(71) Applicant: DAIO PAPER CORPORATION, Shikokuchuo-shi Ehime 799-0492 (JP)
(72) Inventor: SHIMADA, Takuro, Shikokuchuo-shi, Ehime 799-0431 (JP); BISTA, Alina, Shikokuchuo-shi, Ehime 799-0431 (JP); IKAWA, Taro, Shikokuchuo-shi, Ehime 799-0431 (JP)
(74) Representative: Epping - Hermann - Fischer
(86) International application number: PCT/JP2021/005554
(87) International publication number: WO 2021/166852

(57) **Abstract**

An RFID includes a first conductive layer; a second conductive layer in which an antenna is formed; an insulating layer; and an IC chip. The antenna includes a first slot; a second slot facing the first slot; a coupling slot to couple the first slot with the second slot; a first adjustment slot coupled with one end of the first slot, and being wider than the first slot; a second adjustment slot coupled with another end of the first slot, and being wider than the first slot; a third adjustment slot coupled with one end of the second slot, and being wider than the second slot; a fourth adjustment slot coupled with another end of the second slot, and being wider than the second slot.

## Description

### [Technical Field]

The present invention relates to an RFID (Radio Frequency Identification) tag and an antenna.

### [Background Art]

For logistic management and product management, RFID tags affixed to objects to be affixed have become popular. An RFID tag is provided with an IC chip and an antenna electrically connected to the IC chip. The RFID tag is also referred to as a radio tag, IC tag, RF-ID tag, RF tag, or the like.

When a typical RFID tag is affixed to an object to be affixed, for example, made of metal or the like, in some cases, the communication distance may become shorter; in order to cope with such a problem, RFID tags corresponding to objects to be affixed made of metal (referred to as the metal-compatible RFID tag, hereafter) have been proposed (see, for example, Patent Documents 1 to 3).

### [Related Art Documents]

### [Patent Documents]

[Patent Document 1] WO 2016/129542
[Patent Document 2] Published Japanese Translation of PCT International Application 2019-533860
[Patent Document 3] Japanese Laid-Open Patent Application 2016-170576

### [Summary of the Invention]

### [Problem to be Solved by the Invention]

A conventional metal-compatible RFID tag, for example, as described in Patent Documents 1 to 3, includes an antenna having a three-dimensional structure; therefore, difficulties may arise when manufacturing and handling these RFID tags.

One embodiment of the present invention is devised in view of the problem above, to provide a metal-compatible RFID tag that includes an antenna having a planar structure and is easy to manufacture and handle.

### [Means for Solving Problem]

In order to solve the problem described above, an RFID tag according to one embodiment of the present invention includes a first conductive layer; a second conductive layer in which an antenna is formed; an insulating layer provided between the first conductive layer and the second conductive layer; and an IC chip connected to the antenna. The antenna includes a first slot; a second slot facing the first slot; a coupling slot configured to couple a central portion of the first slot with a central portion of the second slot; a first adjustment slot coupled with one end of the first slot, being wider than the first slot, and extending in a direction orthogonal to the first slot; a second adjustment slot coupled with another end of the first slot, being wider than the first slot, and extending in a direction orthogonal to the first slot; a third adjustment slot coupled with one end of the second slot, being wider than the second slot, and extending in a direction orthogonal to the second slot; and a fourth adjustment slot coupled with another end of the second slot, being wider than the second slot, and extending in a direction orthogonal to the second slot.

### [Advantageous Effects of the Invention]

According to one embodiment of the present invention, an RFID tag that includes an antenna having a planar structure and is easy to manufacture and handle can be provided.

### [Brief Description of the Drawings]

FIG. 1 is a diagram illustrating an example of a layer configuration of an RFID tag according to one embodiment;
FIG. 2 is a diagram illustrating an example of a shape of the antenna according to the one embodiment;
FIG. 3 is a diagram illustrating one example of the shape of the central portion in the antenna according to the one embodiment;
FIG. 4 is a diagram for describing a configuration of slots of the antenna according to the one embodiment;
FIG. 5 includes diagrams illustrating one example of the RFID tag according to one embodiment according to the one embodiment;
FIG. 6 includes diagrams illustrating an example of communication characteristics of the antenna according to the one embodiment;
FIG. 7 includes diagrams illustrating an example configuration of an antenna according to a first modified example and an example of communication characteristics;
FIG. 8 is a diagram illustrating an example configuration of an antenna according to a second modified example;
FIG. 9 includes diagrams illustrating an example of communication characteristics of an RFID tag according to the second modified example;
FIG. 10 includes diagrams illustrating an example configuration of an antenna according to a third modified example and an example of communication characteristics; and
FIG. 11 includes diagrams illustrating an example configuration of an antenna according to a fourth modified example and an example of communication characteristics.

### [Embodiments for Carrying Out the Invention]

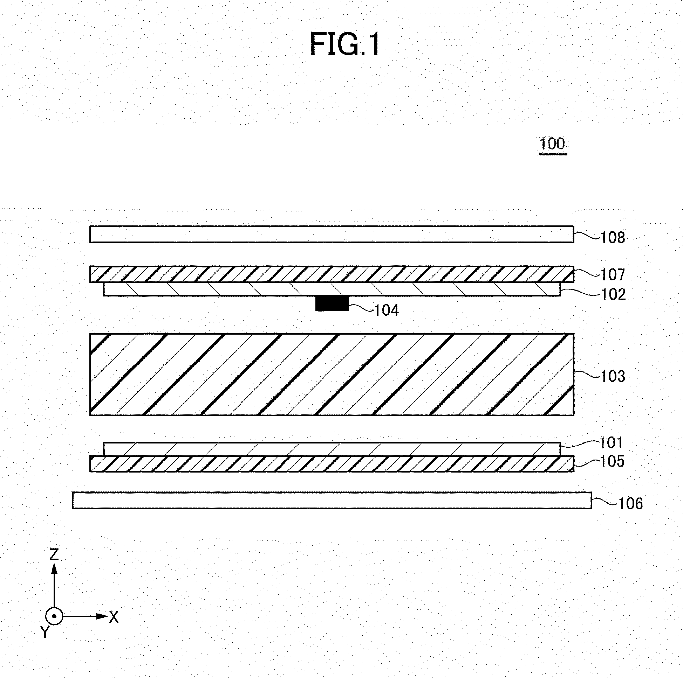

In the following, with reference to the drawings, embodiments according to the present invention will be described in detail. In the following description, for common parts throughout the drawings, the same reference numerals may be assigned, and the description may be omitted. Also, for ease of understanding, the scale of parts in the drawings may differ from a scale of actual cases. A direction as described being parallel, perpendicular, orthogonal, horizontal, vertical, longitudinal, lateral, and so forth, is assumed to have deviation an extent not impairing effects of embodiments. Also, the X-axis direction, the Y-axis direction, and the Z-axis direction include a direction parallel to the X-axis, a direction parallel to the Y-axis, and a direction parallel to the Z-axis, respectively. The X-axis direction, the Y-axis direction, and the Z-axis direction are orthogonal to each other. The XY-plane, the YZ-plane, and the ZX-plane include a virtual plane parallel to the X-axis direction and the Y-axis direction, a virtual plane parallel to the Y-axis direction and the Z-axis direction, and a virtual plane parallel to the Z-axis direction and the X-axis direction, respectively. In FIG. 1 and thereafter, in the X-axis direction, a direction indicated by an arrow is defined as the plus X-axis direction and a direction opposite to the direction is defined as the minus X-axis direction. In the Y-axis direction, a direction indicated by an arrow is defined as the plus Y-axis direction and a direction opposite to the direction is defined as the minus Y-axis direction. In the Z-axis direction, a direction indicated by an arrow is defined as the plus Z-axis direction and a direction opposite to the direction is defined as the minus Z-axis direction.

FIG. 1 is a diagram illustrating an example of a layer configuration of an RFID tag according to one embodiment. An RFID (Radio Frequency Identification) tag 100 includes, for example, a first conductive layer 101 serving as the ground plane, a second conductive layer 102 in which an antenna is formed, an insulating layer 103 provided between the first conductive layer 101 and the second conductive layer 102, an IC chip 104 connected to the antenna, and the like.

The first conductive layer 101 and the second conductive layer 102 are formed of a conductor having high conductivity (e.g., metal such as copper, aluminum, or the like). Note that the first conductive layer 101 and the second conductive layer 102 may be formed of the same conductor, or may be formed of different conductors. The insulating layer 103 is formed of an insulator having low conductivity (e.g., synthetic resin, rubber, etc., favorably foamed plastic such as urethane foam, acrylic foam, etc.). Note that the thickness of the insulating layer 103 can be defined discretionarily. For example, in the case where the operating frequency of the RFID tag 100 is 920 MHz, the thickness of the insulating layer 103 may be set to 100 µm to 500 µm, favorably 200 µm to 400 µm. Also, the thickness of the first conductive layer 101 and the second conductive layer 102 is designed to be sufficiently thinner than the thickness of the thickness of the insulating layer 103. For example, the thickness of each of the first conductive layer 101 and the second conductive layer 102 may be set to 5 µm to 40 µm, favorably 7 µm to 35 µm.

The IC chip 104 is an integrated circuit for an RFID system, and is connected to the antenna formed in the second conductive layer 102. The IC chip 104 receives a radio wave transmitted from a tag reader of an RFID system at a predetermined radio frequency (e.g., 860 MHz to 960 MHz), with the antenna, and generates electric power by the received radio wave to start its operation. Also, by using the generated electric power, the IC chip 104 transmits a radio wave including identification information recorded in advance on the IC chip 104 to the tag reader.

Also, as illustrated in FIG. 1, the RFID tag 100 may include a first resin layer 105 or the like formed of, for example, a synthetic resin or the like, to form or hold the first conductive layer 101, and/or a second resin layer 107 formed of, for example, a synthetic resin or the like to form or hold the second conductive layer 102.

Favorably, a surface of the first resin layer 105 opposite to the surface contacting first conductive layer 101 is a bonding surface, and by peeling off a release paper 106, the RFID tag 100 can be affixed to an object to be affixed. Also, favorably, the RFID tag 100 is provided with a paper cover 108 on which printing or writing can be performed.

The IC chip 104 has an internal capacity and is capable of securing a sufficient communication distance (e.g., around 1 m to 7 m) to communicate with a tag reader, by matching the impedance by an inductance component of the antenna and the internal capacity of the IC chip 104.

### (Configuration of antenna)

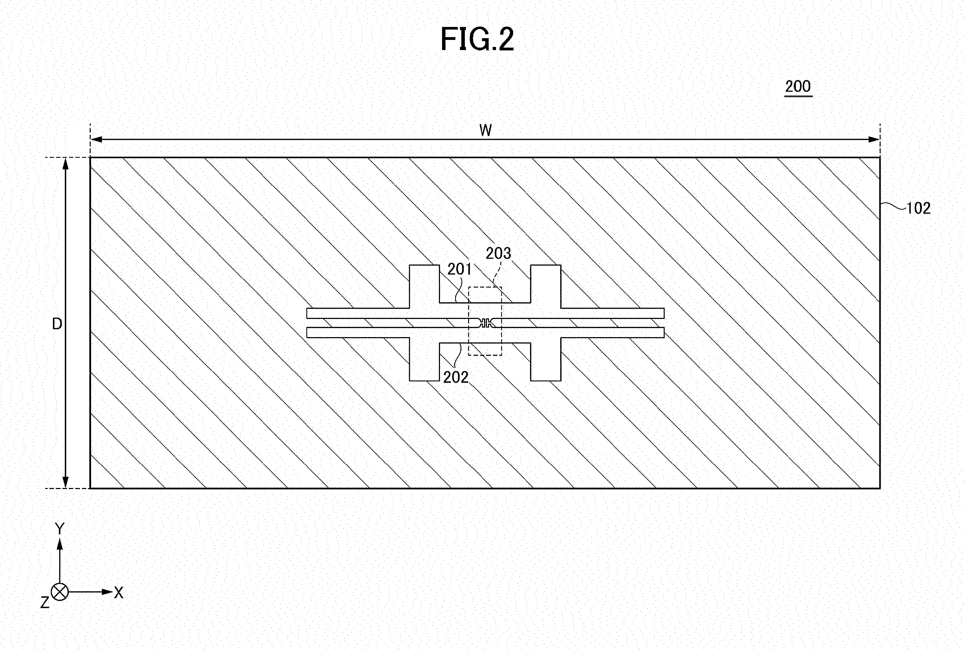

Next, using FIGs. 2 to 4, a configuration of the antenna formed in the second conductive layer 102 will be described.

FIG. 2 is a diagram illustrating an example of a shape of the antenna formed in the second conductive layer 102. This figure illustrates a state of the second conductive layer 102 illustrated in FIG. 1 as viewed from the minus Z-axis direction. As a favorable example, the antenna 200 may be formed in the second conductive layer 102 having an outward appearance of, for example, a rectangle having a width W (W = around 85 to 105 mm) and a depth D (D = around 35 to 45 mm). Favorably, the other layers of the RFID tag 100 described in FIG. 1 also have an outward appearance of a rectangle corresponding to the second conductive layer 102. However, it is not limited as such, and the layers of the RFID tag 100 may have an outward appearance other than a rectangle.

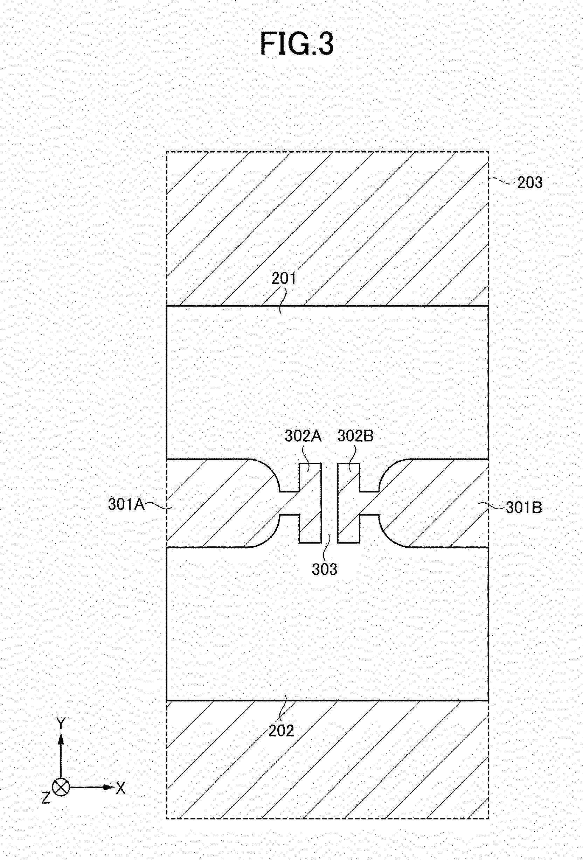

The antenna 200 includes a first slot 201; a second slot 202 facing the first slot 202; and a coupling slot coupling the first slot 201 and the second slot 202 at a central portion 203 of the antenna 200, that are provided in the second conductive layer 102. Note that the central portion 203 and the coupling slot will be described later by using FIG. 3.

Favorably, the first slot 201 and the second slot 202 are formed to extend in a direction parallel to one side (e.g., the long side) of the rectangle (the X-axis direction).

Note that in the present embodiment, within the area of the second conductive layer 102, a portion where the conductor is not formed will be referred to as a "slot". Note that the second conductive layer 102 and slots are formed by pressing, etching, or plating of metal foil of copper, aluminum, or the like; silk screen printing of metal paste; or the like. Note that in FIGs. 1 and 2, although the second conductive layer 102 is hatched, this hatching is to indicate that the corresponding portion of the second conductive layer is a metal, and does not mean illustrating a pattern.

FIG. 3 is a diagram illustrating one example of the shape of the central portion in the antenna according to the one embodiment. This figure is an enlarged view of the central portion 203 of the antenna 200 illustrated in FIG. 2. In FIG. 3, a conductive portion formed by the conductor between the first slot 201 and the second slot 202 is divided by a coupling slot 303 into two conductive portions of a first conductive portion 301A and a second conductive portion 301B. In other words, the coupling slot 303 couples the central portion of the first slot 201 with the central portion of the second slot 202.

Also, as a favorable example, the first conductive portion 301A and the second conductive portion 301B have attachment patterns 302A and 302B formed, respectively, for having the IC chip 104 electrically connected. Note that the shape of the attachment patterns 302A and 302B illustrated in FIG. 3 is determined in consideration of the mountability of the IC chip 104, and other shapes may be adopted.

Further, a positioning pattern for the IC chip 104 may be formed at the central portion 203. The positioning pattern is not connected to the other conductor portion within the second conductive layer 102, and is held by, for example, the second resin layer 107 or the like. Note that the positioning pattern is a constituent element for manufacturing and is not included as a constituent element of the antenna 200, and hence, the description is omitted hereafter.

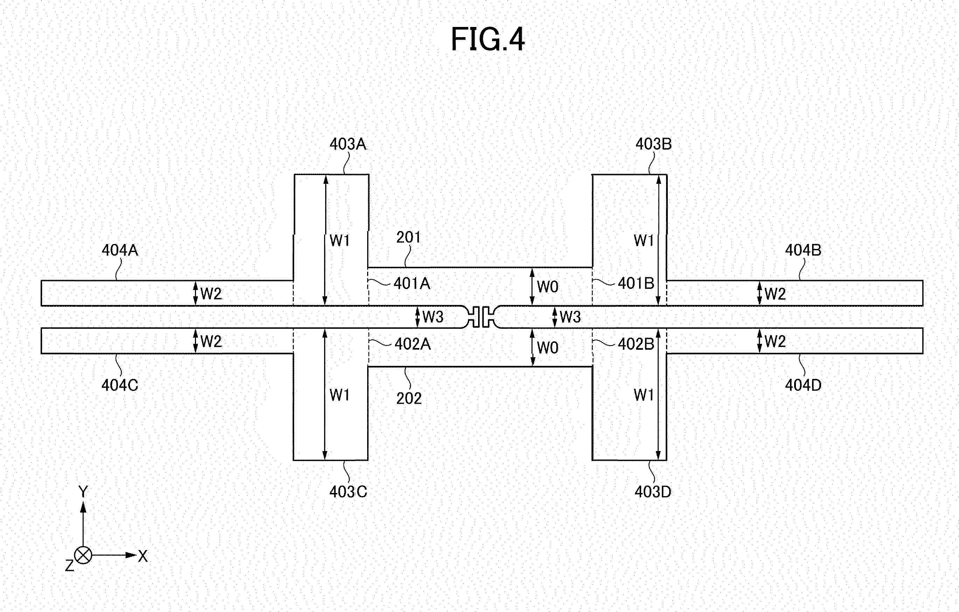

FIG. 4 is a diagram for describing a configuration of slots according to the one embodiment. In FIG. 4, the first slot 201 and the second slot 202 are formed to have the same width W0.

One end portion 401A of the first slot 201 is coupled with a first adjustment slot 403A that has a width W1 broader than the first slot 201, and extends in a direction orthogonal to the first slot 201 (the plus Y-axis direction). Also, another end portion 401B of the first slot 201 is coupled with a second adjustment slot 403B that has the width W1 broader than the first slot 201, and extends in a direction orthogonal to the first slot 201 (the plus Y-axis direction). Note that in FIG. 4, although the end portion 401A, 401B, and the like are illustrated with dashed lines, these lines are imaginary line for showing the boundaries of the slots and do not actually exist. The same applies to the other dashed lines in FIG. 4.

Similarly, one end portion 402A of the second slot 202 is coupled with a third adjustment slot 403C that has the width W1 broader than the second slot 202, and extends in a direction orthogonal to the second slot 202 (the minus Y-axis direction). Also, another end portion 402B of the second slot 202 is coupled with a fourth adjustment slot 403D that has the width W1 broader than the second slot 202, and extends in a direction orthogonal to the second slot 202 (the minus Y-axis direction). Note that in the following description, in the case where any adjustment slot is indicated from among the first adjustment slot 403A, the second adjustment slot 403B, the third adjustment slot 403C, and the fourth adjustment slot 403D, it will be referred to as an "adjustment slot 403".

In the example in FIG. 4, the width W1 is formed to be the same for the respective adjustment slots 403. However, it is not limited as such, and the width of the adjustment slots 403 may vary from one adjustment slot 403 to another. Note that the adjustment slots 403 can be used for, for example, adjustment of the impedance matching between the antenna 200 and the IC chip 104, adjustment of the resonance frequency of the antenna 200, and the like.

Favorably, the antenna 200 further includes a first expansion slot 404A, a second expansion slot 404B, a third expansion slot 404C, and a fourth expansion slot 404D.

The first expansion slot 404A is formed to be coupled with the first slot 201 via the first adjustment slot 403A, to be parallel to the first slot 201, and to extend in a direction away from the first slot 201 (the minus X-axis direction). In the example in FIG. 4, the first expansion slot 404A is coupled with the first adjustment slot 403A at a position opposite to the position at which the first slot 201 is coupled.

The second expansion slot 404B is formed to be coupled with the first slot 201 via the second adjustment slot 403B, to be parallel to the first slot 201, and to extend in a direction away from the first slot 201 (the plus X-axis direction). In the example in FIG. 4, the second expansion slot 404B is coupled with the second adjustment slot 403B at a position opposite to the position at which the first slot 201 is coupled.

The third expansion slot 404C is formed to be coupled with the second slot 202 via the third adjustment slot 403C, to be parallel to the second slot 202, and to extend in a direction away from the second slot 202 (the minus X-axis direction). In the example in FIG. 4, the third expansion slot 404C is coupled with the third adjustment slot 403C at a position opposite to the position at which the second slot 202 is coupled.

The fourth expansion slot 404D is formed to be coupled with the second slot 202 via the fourth adjustment slot 403D, to be parallel to the second slot 202, and to extend in a direction away from the second slot 202 (the plus X-axis direction). In the example in FIG. 4, the fourth expansion slot 404D is coupled with the fourth adjustment slot 403D at a position opposite to the position at which the second slot 202 is coupled. Note that in the following description, in the case where any expansion slot is indicated from among the first expansion slot 404A, the second expansion slot 404B, the third expansion slot 404C, and the fourth expansion slot 404D, it will be referred to as an "expansion slot 404".

In the example in FIG. 4, the width W2 is formed to be the same for the respective expansion slots 404. However, it is not limited as such, and the width of the expansion slots 404 may vary, for example, from one expansion slot 404 to another. Note that the expansion slot 404 is used for, for example, adjustment of the impedance matching between the antenna 200 and the IC chip 104, adjustment of the resonance frequency of the antenna 200, and the like.

Note that the dimensions of W0, W1, W2, and W3 that will be described later, can be defined discretionarily. For example, in the case where the operating frequency of the RFID tag 100 is 920 MHz, W0 can be set to 1.00 mm to 3.00 mm, favorably 1.50 mm to 2.5 mm. W1 can be set to 4.00 mm to 10.00 mm, favorably 5.00 mm to 8.00 mm. W2 can be set to 0.8 mm to 2.00 mm, favorably 1.0 mm to 1.5 mm. W3 can be set to 0.5 mm to 1.5 mm, favorably 0.7 mm to 1.3 mm.

### [Example of specific configuration of RFID tag]

Next, an example of a more specific configuration of the RFID tag 100 according to the present embodiment will be described.

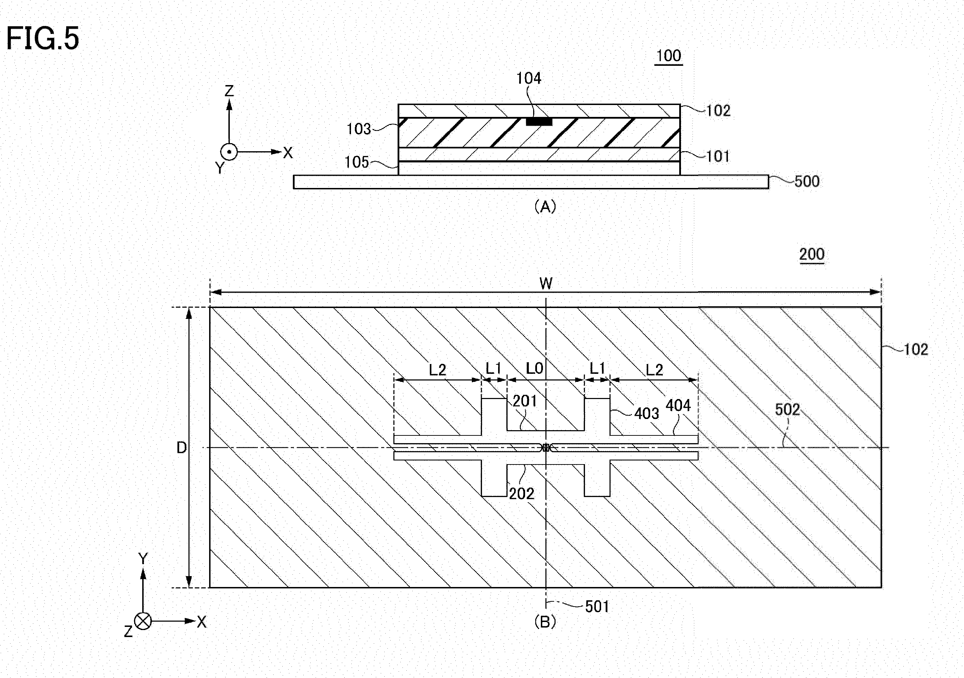

FIG. 5 includes diagrams illustrating one example of a specific configuration of the RFID tag according to the one embodiment. This figure illustrates an example of a specific configuration of the RFID tag 100 produced by the inventors, with which good results were obtained.

FIG. 5(A) illustrates the layer configuration of the produced RFID tag 100. The RFID tag 100 is provided with a first conductive layer 101 serving as the ground plane, a second conductive layer 102 in which an antenna 200 is formed, and an insulating layer 103 provided between the first conductive layer 101 and the second conductive layer 102. Also, the first conductive layer 101 is affixed to an object to be affixed 500 via the first resin layer 105.

For the first conductive layer 101 and the second conductive layer 102, aluminum (a thickness of 10 µm) was used as the conductor. However, as the conductor, for example, metal other than aluminum such as copper may be used.

For the insulating layer 103, acrylic foam (a thickness of 300 µm) was used as the insulator. However, as the insulator, for example, an insulator other than acrylic form such as urethane foam may be used.

FIG. 5(B) illustrates the shape of the antenna 200 formed in the second conductive layer 102 of the produced RFID tag 100. The antenna 200 was formed to have the second conductive layer 102 being a rectangular conductor having a lateral width of W=95.00 mm and a depth of D=40.00 mm, in which the first slot, the second slot 202, the coupling slot 303, the adjustment slot 403, the expansion slot 404, and the like are formed as described with FIGs. 3 and 4.

Note that the length L0 of the first slot 201 and the second slot 202, the length L1 of the adjustment slots, and the length L2 of the expansion slots 404 can be defined discretionarily. For example, in the case where the operating frequency of the RFID tag 100 is 920 MHz, L0 can be set to 9.00 mm to 13.00 mm, favorably 10.00 mm to 12.00 mm. L1 can be set to 2.50 mm to 5.00 mm, favorably 3.00 mm to 4.00 mm. L2 can be set to 10.00 mm to 15.00 mm, favorably 11.50 mm to 13.50 mm.

Note that the central portion 203 as illustrated in FIG. 3 was formed at the center of the second conductive layer 102, and the IC chip 104 was electrically connected between the attachment patterns 302A and 302B. Also, the first slot 201 and the second slot were formed to extend in a direction parallel to the long side (one side) of the rectangle (the X-axis direction). Note that the width W0 of the first slot 201 and the second slot 202 was set to 1.90 mm, and the width W3 of the first conductive portion 301A and the second conductive portion 301B was set to 1.00 mm. Also, the length L0 of the first slot 201 and the second slot was set to 10.80 mm.

Also, as illustrated in FIG. 5(B), the first to fourth adjustment slots 403 and the first to fourth expansion slots 404 were formed so as to be line symmetric with respect to a centerline 501 of the second conductive layer 102 in the Y-axis direction, and to be line symmetric with respect to a centerline 502 in the X-axis direction. Note that the width W1 of the adjustment slot 403 was set to 6.50 mm and the length L1 was set to 3.6 mm. Also, the width W2 of the expansion slot 404 was set to 1.30 mm and the length L2 was set to 12.50 mm. Note that the dimensions of the respective portions were determined by producing prototypes to determine the best balance between the center frequency and the communication distance.

### [Communication characteristics of RFID tag]

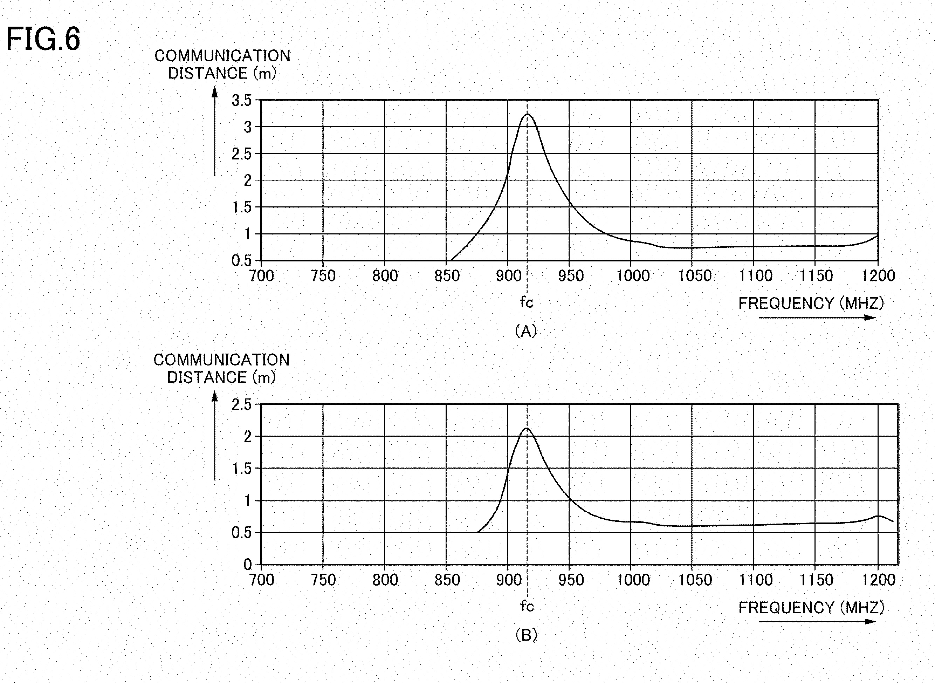

FIG. 6 includes diagrams illustrating an example of communication characteristics of the antenna according to the one embodiment. FIG. 6(A) illustrates an example of a measurement result obtained by measuring the relationship between the frequency and the communication distance with a commercially available RFID tag/label performance inspection device, in the case where a metal plate (a stainless steel plate) was used as the object to be affixed 500 for the RFID tag 100 described in FIG. 5.

In FIG. 6(A), the horizontal axis indicates the frequency (MHz), and the vertical axis indicates the communication distance (m). Note that in the following description, a frequency at which a maximum communication distance of the RFID tag 100 is obtained will be referred to as a center frequency fc.

As illustrated in FIG. 6(A), the produced RFID tag 100 had a center frequency fc around 920 MHz that is commonly used in an RFID system, and a communication distance of 3 m or longer at the center frequency fc. As such, the produced RFID tag 100 was confirmed to have good communication characteristics when affixed to the metal plate.

Note that the center frequency fc of the RFID tag 100 can be adjusted to a predetermined frequency, for example, by changing the length L2 of the expansion slots 404. For example, by making the length L2 of the expansion slots 404 longer, the center frequency fc can be changed to a lower frequency. Also, by making the length L2 of the expansion slots 404 shorter, the center frequency fc can be changed to a higher frequency.

FIG. 6(B) illustrates an example of a measurement result obtained by measuring the relationship between the frequency and the communication distance with an RFID tag/label performance inspection device, in the case where the object to be affixed 500 was paper in FIG. 5(A). The produced RFID tag 100 exhibited little change in the center frequency fc even in the case of the object to be affixed 500 being paper, and at a frequency around 920 MHz commonly used in an RFID system, it was confirmed that the communication distance around 2 m could be secured.

In this way, the RFID tag 100 according to the present embodiment, the antenna 200 formed in the second conductive layer 102 is affixed to the object to be affixed 500 via the first conductive layer 101 serving as the ground plane, and hence, has a feature of being unlikely to be affected by the material of the object to be affixed 500.

As described above, according to the one embodiment of the present invention, a metal-compatible RFID tag (the RFID tag 100) that includes the antenna 200 having a planar structure and is easy to manufacture and handle can be provided.

For example, the antenna 200 of the RFID tag 100 according to the present embodiment has a planar structure as described with FIGs. 1 to 5. Therefore, for example, by pressing, etching, or plating of metal foil; silk screen printing of metal paste; or the likes, it can be manufactured more easily than conventional metal-compatible RFID tags having three-dimensional structures.

Also, for example, the RFID tag 100 having a layer configuration as illustrated in FIG. 5(A) can be manufactured to have a thickness of approximately 500 to 600 µm, and hence, printing by a label printer, encoding, and the like can be performed.

Further, for example, in a metal-compatible RFIF tag as shown in Patent Document 3, the antenna portion has a structure of protruding out of a metal object to be affixed; therefore, there is a risk that the RFID tag may fall off or be broken. In contrast, the RFID tag 100 according to the present embodiment has a flat structure; therefore, the risk of falling off or breaking of the RFID tag 100 is reduced, and handling becomes easier.

### [Modified examples]

The RFID tag 100 and the antenna 200 illustrated in FIG. 5 can be modified and applied in a variety of ways. Here, first to fourth modified examples having the layer configuration illustrated in FIG. 5(A), in which part of the configuration of the antenna 200 illustrated in FIG. 5(B) is modified, will be described.

### (First modified example)

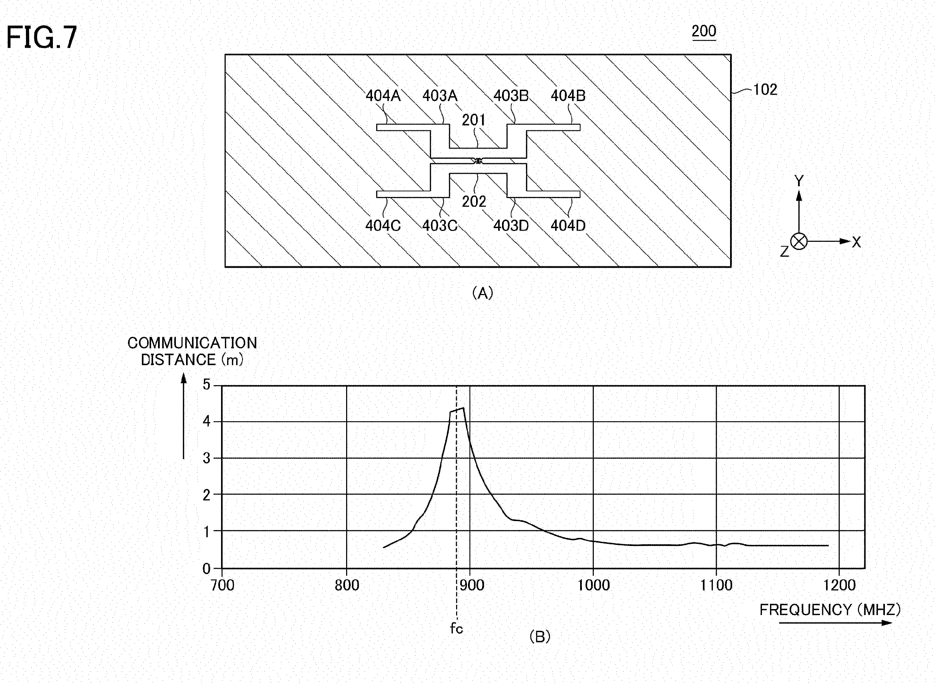

FIG. 7 includes diagrams illustrating an example configuration of an antenna according to a first modified example and an example of communication characteristics. FIG. 7(A) illustrates an example configuration of the antenna 200 formed in the second conductive layer 102 of the RFID tag 100 according to the first modified example.

As illustrated in FIG. 7(A), in the antenna 200 according to the first modified example, the positions of the expansion slots 404 are changed, compared to the configuration of the antenna 200 according to the one embodiment described in FIG. 5(B). For example, in FIG. 7(A), the first expansion slot 404A has a coupling position with the first adjustment slot 403A shifted in the plus Y direction, and the second expansion slot 404B has a coupling position with the second adjustment slot 403B shifted in the plus Y direction. Also, the third expansion slot 404C has a coupling position with the third adjustment slot 403C shifted in the minus Y direction, and the fourth expansion slot 404D has a coupling position with the fourth adjustment slot 403D shifted in the plus Y direction.

FIG. 7(B) illustrates an example of a measurement result showing the relationship between the frequency and the communication distance, in the case where the object to be affixed 500 is a metal plate in the RFID tag 100 in which the antenna 200 according to the first modified example as illustrated in FIG. 7(A) is formed in the second conductive layer 102.

In the example in FIG. 7(B), compared to the measurement result of the RFID tag 100 according to the one embodiment illustrated in FIG. 6(A), it can be seen that the center frequency fc decreases from around 920 MHz to around 880 MHz.

From this result, for example, as illustrated in FIG. 7(A), by shifting the coupling positions of the expansion slot 404 and the adjustment slot 403 in the Y-axis direction, it can be inferred that the center frequency fc can be adjusted to a certain extent.

Also, for example, in the case where it is desirable to adjust the center frequency fc in a lower direction while not increasing the length of the antenna 200 in the X-axis direction, one may consider adopting the antenna 200 according to the first modified example as illustrated in FIG. 7(A).

Note that by shortening the length L2 of the expansion slots 404 and adjusting the center frequency fc to come around 920 MHz, it can be considered that good characteristics are obtained for the antenna 200 according to the first modified example as an antenna for the RFID tag 100.

### (Second modified example)

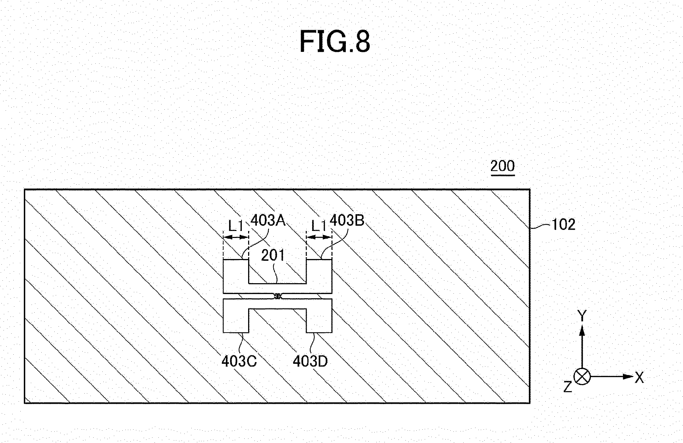

FIG. 8 is a diagram illustrating an example configuration of an antenna according to a second modified example. This figure illustrates an example configuration of the antenna 200 formed in the second conductive layer 102 of the RFID tag 100 according to the second modified example.

As illustrated in FIG. 8, the antenna 200 according to the second modified example has a configuration in which the expansion slots 404 included in the configuration of the antenna 200 according to the one embodiment described in FIG. 5(B) are omitted. In the antenna 200 according to the second modified example as such, the center frequency fc can be changed by changing the length L1 of the adjustment slots 403, instead of the length L2 of the expansion slots 404.

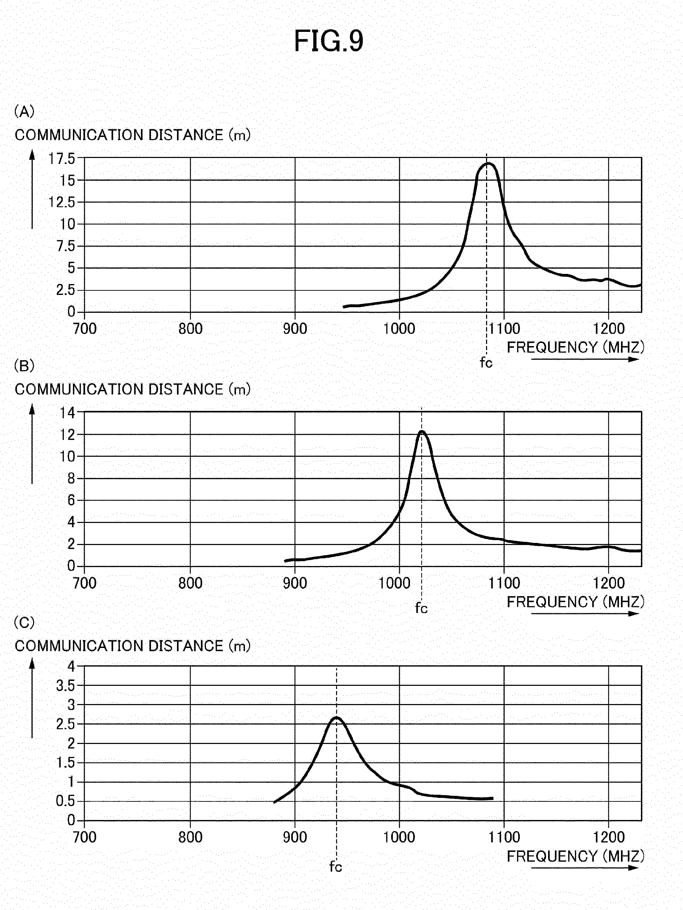

FIG. 9(A) illustrates an example of a measurement result showing the relationship between the frequency and the communication distance in the case where an RFID tag 100 having a length L1 of the adjustment slots 403 being 3.6 mm is affixed to a metal plate, in the antenna 200 according to the second modified example as illustrated in FIG. 8.

In the example in FIG. 9(A), compared to the measurement result of the RFID tag 100 according to the one embodiment illustrated in FIG. 6(A), the center frequency fc increases from around 920 MHz to around 1090 MHz. Accordingly, it can be stated that the expansion slot 404 has an effect of lowering the center frequency fc in the antenna 200 according to the second modified example as illustrated in FIG. 8.

FIG. 9(B) illustrates an example of a measurement result showing the relationship between the frequency and the communication distance in the case where an RFID tag 100 having a length L1 of the adjustment slots 403 being 4.6 mm is affixed to a metal plate, in the antenna 200 according to the second modified example as illustrated in FIG. 8.

In the example in FIG. 9(B), compared to the measurement result illustrated in FIG. 9(A), it can be seen that the center frequency fc decreases from around 1900 MHz to around 1020 MHz. Accordingly, by making the length L1 of the expansion slot 404 longer, it can be considered that the center frequency fc can be adjusted to a lower frequency.

FIG. 9(C) illustrates an example of a measurement result showing the relationship between the frequency and the communication distance in the case where an RFID tag 100 having a length L1 of the adjustment slots 403 being 5.1 mm is affixed to a metal plate, in the antenna 200 according to the second modified example as illustrated in FIG. 8.

In the example in FIG. 9(C), compared to the measurement result illustrated in FIG. 9(B), it can be seen that the center frequency fc decreases from around 1020 MHz to around 940 MHz. Therefore, by forming the length L1 of the adjustment slots 403 to be a bit longer, there is a likelihood that the center frequency fc can be adjusted around 920 MHz commonly used in an RFID system.

In contrast, as for the communication distance, in the example in FIG. 9(C), the communication distance around 940 MHz is around 2.5 m, and in the case where the length L1 of the adjustment slots 403 is formed to be a bit longer to set the center frequency fc to 920 MHz, there is a likelihood that the communication distance becomes further shorter. However, for example, for applications in which the communication distance around 2 m is sufficient, the antenna 200 according to the second modified example as illustrated in FIG. 8 can be adopted.

Note that in the antenna 200 according to the second modified example as illustrated in FIG. 8, although only the length L1 of the adjustment slots 403 is changed, the center frequency fc can be changed by changing the width W1 of the adjustment slots 403.

### (Third modified example)

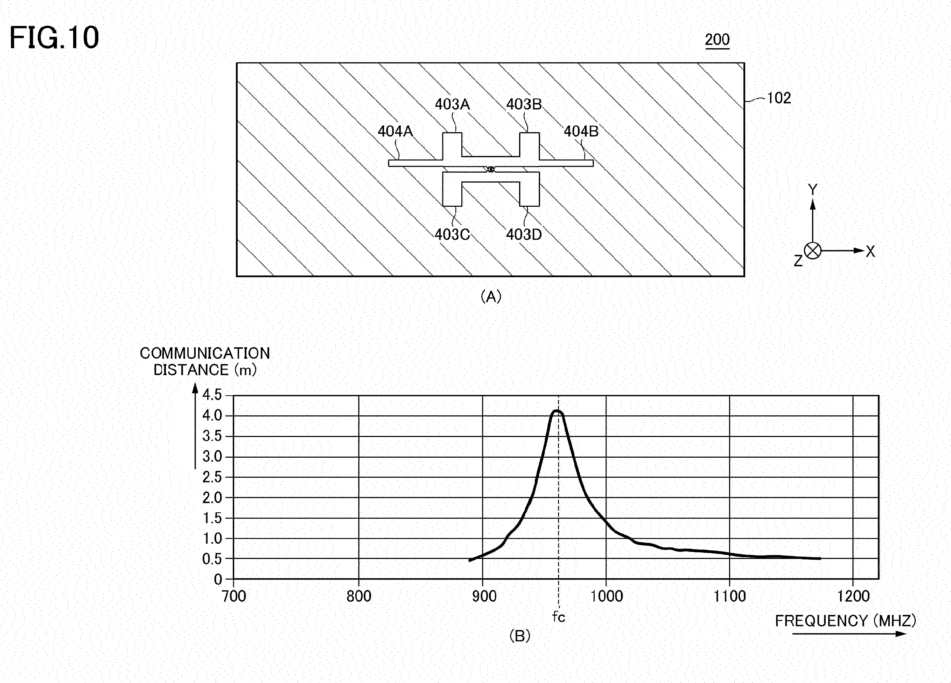

FIG. 10 includes diagrams illustrating an example configuration of an antenna according to a third modified example. FIG. 10(A) illustrates an example configuration of the antenna 200 formed in the second conductive layer 102 of the RFID tag 100 according to the third modified example.

As illustrated in FIG. 10(A), the antenna 200 according to the third modified example has a configuration in which the third expansion slot 404C and the fourth expansion slot 404D from among the expansion slots 404 included in the configuration of the antenna 200 according to the one embodiment described in FIG. 5(B) are omitted. Note that the antenna 200 according to the third modified example may have a configuration in which the first expansion slot 404A and the second expansion slot 404B are omitted, whereas the third expansion slot 404C and the fourth expansion slot 404D are provided. In this way, the antenna 200 may have some of the expansion slots 404 omitted.

FIG. 10(B) illustrates an example of a measurement result showing the relationship between the frequency and the communication distance, in the case where the object to be affixed 500 is a metal plate in the RFID tag 100 in which the antenna 200 according to the third modified example as illustrated in FIG. 10(A) is formed in the second conductive layer 102.

In the example in FIG. 10(B), compared to the measurement result of the RFID tag 100 according to the one embodiment illustrated in FIG. 6(A), the center frequency fc increases from around 920 MHz to around 970 MHz. In this case, for example, by making the length L2 of the first expansion slot 404A and the second expansion slot 404B further longer, there is a likelihood that the center frequency fc can be adjusted around 920 MHz commonly used in an RFID system.

However, as illustrated in FIG. 10, the antenna 200 according to the third modified example has an asymmetric configuration of the expansion slots 404; therefore, for example, there is a likelihood that in the XY plane, the directional characteristic of the antenna 200 is also asymmetric. However, depending on the application, there are cases where the directional characteristic of the antenna 200 can be asymmetric or is desired to be asymmetric; in such cases, there is a likelihood that the antenna 200 according to the third modified example as illustrated in FIG. 10 can be adopted.

### (Fourth modified example)

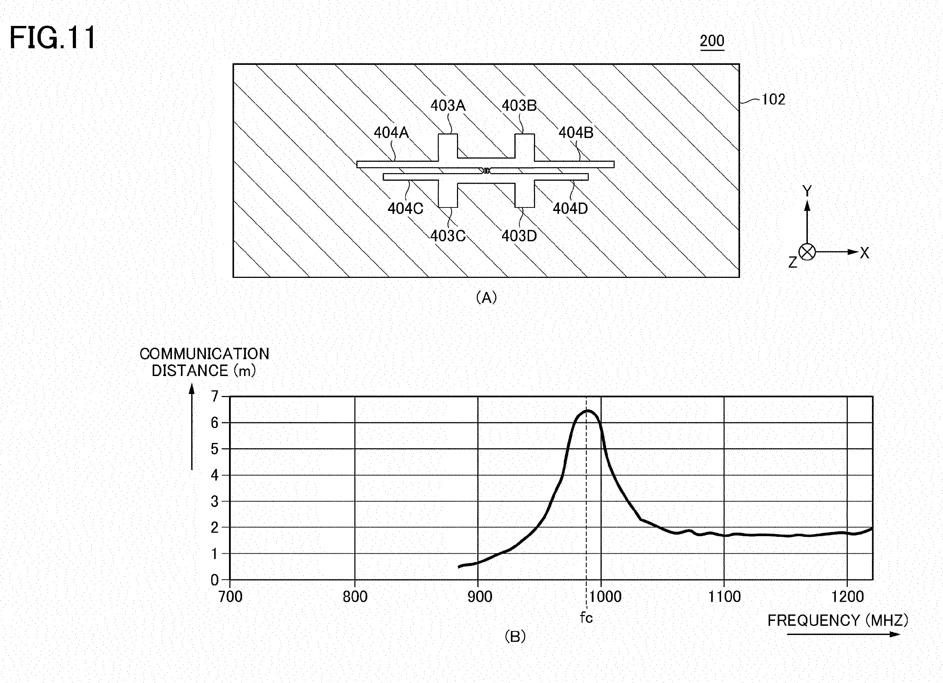

FIG. 11 includes diagrams illustrating an example configuration of an antenna according to a fourth modified example. FIG. 11(A) illustrates an example configuration of the antenna 200 formed in the second conductive layer 102 of the RFID tag 100 according to the fourth modified example.

As illustrated in FIG. 11(A), the antenna 200 according to the fourth modified example has a configuration in which the length L2 of the first expansion slot 404A and the second expansion slot 404B in the antenna 200 according to the one embodiment described in FIG. 5(B) is extended to 15.00 mm. Note that the antenna 200 according to the fourth modified example may have a configuration in which the length L2 of the third expansion slot 404C and the fourth expansion slot 404D is extended to 15.00 mm. In this way, in the antenna 200, the length L2 of the respective expansion slots 404 is not necessarily the same.

FIG. 11(B) illustrates an example of a measurement result showing the relationship between the frequency and the communication distance, in the case where the object to be affixed 500 is a metal plate in the RFID tag 100 in which the antenna 200 according to the fourth modified example as illustrated in FIG. 11(A) is formed in the second conductive layer 102.

In the example in FIG. 11(B), compared to the measurement result of the RFID tag 100 according to the one embodiment illustrated in FIG. 6(A), the center frequency fc increases from around 920 MHz to around 990 MHz.

In the description of the antenna 200 according to the one embodiment illustrated in FIG. 5(B), it has been described that by making the length L2 of the expansion slot 404 longer, the center frequency fc can be adjusted lower. However, in the antenna 200 according to the fourth modified example, the center frequency fc is shifted to a higher frequency. In this way, in the case where some of the lengths L2 of the expansion slots 404 are different, unexpected measurement results may be obtained. Therefore, for example, in the case where the length L2 of the four expansion slots 404 is changed uniformly, and a good result is not obtained, there is a likelihood that the situation can be overcome by changing the length L2 of some of the expansion slots 404 from among the four expansion slots 404.

The configuration illustrated in each of the embodiment and examples described above shows one example of the contents of the present invention, which may be combined with other publicly known techniques, and part of the configuration can also be omitted or changed, without deviating from the gist of the present invention.

The present application claims priority to a base application No. 2020-026431, filed on February 19, 2020, with the Japan Patent Office, the entire contents of which are hereby incorporated by reference.

### [List of Reference Numerals]

- 100: RFID tag
- 101: first conductive layer
- 102: second conductive layer
- 103: insulation layer
- 104: IC chip
- 201: first slot
- 202: second slot
- 301A: first conductive portion
- 301B: second conductive portion
- 303: coupling slot
- 403A: first adjustment slot
- 403B: second adjustment slot
- 403C: third adjustment slot
- 403D: fourth adjustment slot
- 404A: first expansion slot
- 404B: second expansion slot
- 404C: third expansion slot
- 404D: fourth expansion slot

## Claims

1. An RFID tag comprising:
a first conductive layer;
a second conductive layer in which an antenna is formed;
an insulating layer provided between the first conductive layer and the second conductive layer; and
an IC chip connected to the antenna,
wherein the antenna includes
a first slot,
a second slot facing the first slot,
a coupling slot configured to couple a central portion of the first slot with a central portion of the second slot,
a first adjustment slot coupled with one end of the first slot, being wider than the first slot, and extending in a direction orthogonal to the first slot,
a second adjustment slot coupled with another end of the first slot, being wider than the first slot, and extending in a direction orthogonal to the first slot,
a third adjustment slot coupled with one end of the second slot, being wider than the second slot, and extending in a direction orthogonal to the second slot, and
a fourth adjustment slot coupled with another end of the second slot, being wider than the second slot, and extending in a direction orthogonal to the second slot.

2. The RFID tag as claimed in claim 1, further comprising:
a first expansion slot coupled with the first slot through the first adjustment slot, and being parallel to the first slot, and extending in a direction away from the first slot; and
a second expansion slot coupled with the first slot through the second adjustment slot, and being parallel to the first slot, and extending in a direction away from the first slot.

3. The RFID tag as claimed in claim 2, further comprising:
a third expansion slot coupled with the second slot through the third adjustment slot, being parallel to the second slot, and extending in a direction away from the second slot; and
a fourth expansion slot coupled with the second slot through the fourth adjustment slot, being parallel to the second slot, and extending in a direction away from the second slot.

4. The RFID tag as claimed in any one of claims 1 to 3, wherein the coupling slot divides a conductive portion formed between the first slot and the second slot into two portions, and
wherein the IC chip is electrically connected between the two divided conductive portions.

5. The RFID tag as claimed in any one of claims 1 to 3, wherein an outward appearance of the second conductive layer is a rectangle, and
wherein the first slot and the second slot extend in a direction parallel to one side of the rectangle.

6. The RFID tag as claimed in any one of claims 1 to 5, wherein the first adjustment slot and the second adjustment slot extend in a direction away from the second slot, and
wherein the third adjustment slot and the fourth adjustment slot extend in a direction away from the first slot.

7. The RFID tag as claimed in any one of claims 1 to 6, wherein impedance matching between the IC chip and the antenna, or a resonance frequency of the antenna is adjusted according to a shape of the first adjustment slot, the second adjustment slot, the third adjustment slot, and the fourth adjustment slot.

8. The RFID tag as claimed in claim 3, wherein impedance matching between the IC chip and the antenna, or a resonance frequency of the antenna is adjusted according to a shape of the first expansion slot, the second expansion slot, the third expansion slot, and the fourth expansion slot.

9. The RFID tag as claimed in any one of claims 1 to 6, wherein the antenna is affixed to an object to be affixed via the first conductive layer.

10. An antenna used in the RFID tag as claimed in any one of claims 1 to 9.
